(19) Europäisches Patentamt
European Patent Office
Office européen des brevets

(11) **EP 3 025 133 B1**

(12) **EUROPEAN PATENT SPECIFICATION**

(45) Date of publication and mention
of the grant of the patent:
**16.08.2017 Bulletin 2017/33**

(51) Int Cl.:
*G01L 1/18* *(2006.01)*      *G01B 7/16* *(2006.01)*
*H01L 31/0384* *(2006.01)*

(21) Application number: **14767125.9**

(22) Date of filing: **24.07.2014**

(86) International application number:
**PCT/IB2014/063381**

(87) International publication number:
**WO 2015/011670 (29.01.2015 Gazette 2015/04)**

(54) **PIEZORESISTIVE MATERIAL EXHIBITING AN OPTIMAL GAUGE FACTOR**

PIEZORESISTIVES MATERIAL MIT OPTIMALEM DEHNUNGSFAKTOR

MATÉRIAU PIÉZORÉSISTIF PRÉSENTANT UN FACTEUR DE JAUGE OPTIMAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.07.2013 EP 13306072**

(43) Date of publication of application:
**01.06.2016 Bulletin 2016/22**

(73) Proprietors:
• **Ecole Polytechnique**
  **91120 Palaiseau (FR)**
• **Centre National de la Recherche Scientifique**
  **75016 Paris (FR)**

(72) Inventors:
• **GACOIN, Thierry**
  **F-91440 Bures sur Yvette (FR)**
• **ROWE, Alistair**
  **F-91400 Orsay (FR)**
• **DAS GUPTA, Tapajyoti**
  **F-91120 Palaiseau (FR)**

(74) Representative: **Gevers & Orès**
  **41 avenue de Friedland**
  **75008 Paris (FR)**

(56) References cited:
**US-A- 6 073 497**

• **SONG C ET AL: "Evaluation and design
optimization of piezoresistive gauge factor of
thick-film resistors", PROCEEDINGS OF
SOUTHEASTCON. WILLIAMSBURG, APRIL 7 - 10,
1991; [PROCEEDINGS OF THE SOUTHEAST
CONFERENCE], NEW YORK, IEEE, US, vol. -, 7
April 1991 (1991-04-07), pages 1106-1109,
XP010045078, DOI: 10.1109/SECON.1991.147935
ISBN: 978-0-7803-0033-0**
• **ZHOU ET AL: "Percolation transition and
hydrostatic piezoresistance for carbon black
filled poly(methylvinylsilioxane) vulcanizates",
CARBON, ELSEVIER, OXFORD, GB, vol. 46, no.
4, 2 February 2008 (2008-02-02), pages 679-691,
XP022542578, ISSN: 0008-6223, DOI:
10.1016/J.CARBON.2008.01.028**

**Description**

The present invention relates to a multilayered composite material and also to a process for manufacturing said multilayered composite material. The present invention also relates to the use of said multilayered composite material as strain gauge exhibiting high sensitivity. An example of a prior-art multi-layered composite material, comprising an insulating flexible matrix having a plurality of conducting filler particles is given by US 6,073,497. Piezoresistance may be defined as a change in the electrical resistance (R) of an electrical device induced by an applied mechanical stress. This phenomenon is widely used for strain gauge devices allowing the measure of mechanical deformations of solids.

Example of applications of strain gauges are: i) real-time measurement of small strains in structural components such as parts of buildings and fuselage components on aircraft, ii) point-of-care medical systems such as blood pressure and heart rate monitors, and iii) surface quality control on production lines using fully automated atomic force microscopes.

The magnitude of the piezoresistance is often quantitatively evaluated by the so-called Gauge factor, GF, defined as the relative change in resistance caused by the stress applied, per unit strain.

In addition to a simple change of sample dimensions, the applied stress may modify the electronic structure and thus the electrical resistance of solids as explained later on. This effect has been widely studied in bulk metals and in silicon where $GF \sim 2$ and $GF \sim 100$ respectively.

Much larger gauge factors are of interest, not only from a scientific viewpoint since new phenomena may be involved, but also for the increased sensitivity of stress detection.

Apart from metals and silicon based materials and nanostructures, other possible piezoresistive materials are composite materials with networks of conducting particles. Conducting composite materials consist of a total volume, $Vc$, of conducting particles distributed throughout an insulating matrix of volume $Vm$. The electrical resistance as a function of the volume fraction $\phi = Vc/Vm+Vc$, has been widely studied since it reveals a metal-insulator transition at a so-called critical volume fraction, $\phi^*$ *(Kirkpatrick, S. Rev. Mod. Phys. 1973, 45, 574)*. This transition from an insulating behavior to metallic behavior, during which the resistance, that may vary by several orders of magnitude with changes in $\phi$ as small as 1 % or less, is associated with percolative transport. $\phi^*$ is also called percolation threshold. In this case R varies as $R \infty (\phi - \phi^*)^{-t}$ for $\phi$ slightly to the metallic side of the transition i.e. $\phi \geq \phi^*$ (where $t$ is known as the critical exponent).

However, for the most part, the literature treats cases either well below ($\phi << \phi^*$) (Zhou et Al, Carbon 2008, 46, 679) or well above ($\phi >> \phi^*$) said percolation threshold *(Stankovich et Al. Nature 2006, 442, 282)* where *GF* is typically around 100 at best. Values ranging from *GF* = 843 in silicon/metal hybrids have been observed *(Rowe, A. C. H. ; Donoso-Barrera, A. ; Renner, Ch.; Arscott, S. Phys. Rev. Lett. 2008, 100, 145501.)* and values more than 3000 in silicon nanowires have been reported *(He, R. ; Yang, P. Nat. Nanotechnol. 2006, 1, 42.)* although in the latter case the existence and details of the phenomenon are disputed.

The effect of stress is simple to understand since it modifies the connectivity between clusters. For $\phi < \phi^*$, the clusters of metallic particles are always disconnected regardless of the applied stress and the resistance remains high and changes very little with stress. For $\phi > \phi^*$, clusters of metallic particles are always connected regardless of the applied stress and the resistance remains low and changes very little. Close to $\phi^*$ the connectivity between clusters of metallic particles is greatly influenced by the applied stress, and the resistance may change significantly, yielding high gauge factors (GF).

Nevertheless, although the GF is expected to reach very high values very close to the percolation threshold, it has not been studied experimentally due to the difficulty in carrying out a process of fabrication of a composite material with sufficiently fine control of the metal volume fraction $\phi$.

Moreover, near the critical volume fraction $\phi^*$, the gauge factor varies like $GF \infty (\phi - \phi^*)^{-1}$, i.e. it diverges as $\phi \rightarrow \phi^*$.

Indeed, it is expected that fluctuations in the resistance close to $\phi^*$ will also diverge, leading to intrinsic fluctuations in GF when a nominally identical measurement of it is repeated multiple times since the resistance can not accurately measured at $\phi^*$.

Therefore, in terms of applications, it is preferable to provide a piezoresistive material which presents not a maximum Gauge Factor (where the fluctuations in terms of resistance measurements are important) but a piezoresistive material which presents a Gauge Factor for which a highest intrinsic signal to noise ratio is obtained. Said intrinsic signal to noise ratio is given by a figure of merit of the piezoresistive material.

FR1054532 relates a process for the manufacture of metal/silica nano-composite thin films. This process is based on the photo-catalytic reduction of metallic ions inside a porous insulating matrix by irradiating the nano-composite thin film with a given radiation. In the process disclosed in this document, the irradiation is of a sufficient time to reach a percolation threshold, beyond which metallic nanoparticles (obtained by photocatalyzed reduction of the metal ions) form an electrically conducting structure. In this document, since a high conductivity is expected, the material is irradiated so as to reach a value $\phi >> \phi^*$, and therefore no fine tuning around $\phi^*$ has been performed. Moreover, this document does not deal with the issue regarding the fluctuations of the values of GF when $\phi \sim \phi^*$.

Consideration of the prior art leads to the conclusion that there is a need to provide piezoresistive material exhibiting high sensitivity.

It is an object of the present invention to provide a piezoresistive material exhibiting an optimal Gauge Factor in terms of applications, i.e exhibiting a maximum intrinsic signal to noise ratio, and therefore, exhibiting a high sensitivity.

After extensive research, Applicants have developed new piezoresistive materials having a high sensitivity, much higher than actual piezoresistive materials.

A subject of the present application is therefore a multilayer composite material comprising:

- a base layer
- a metallic layer consisting of an insulating matrix phase and of a metallic particles phase, said metallic particles being preferably homogeneously distributed in the insulating matrix, wherein a volume fraction $\phi$ being the ratio between the volume of metallic particles and the volume of the metallic layer corresponds to a critical volume fraction $\phi^* + \delta\phi$, with $0<\delta\phi\leq5\%$, the critical volume fraction $\phi^*$ being the volume fraction for which an increase of conductivity of the metallic layer as a function of the volume fraction $\phi$ has a maximum value.

When the amount of metal in the metallic layer increases, after an initial limited decrease of the electrical resistance of the metallic layer, the electrical resistance suddenly decreases. Then, the electrical resistance decreases more and more slowly. In other terms, in a first phase there is an acceleration of the decrease of electric resistance and then in the second phase there is a slowdown of the decrease of electric resistance. The acceleration of the decrease of electric resistance is null between said both phases.

According to the invention, this point between both phases is named "critical volume fraction" abbreviated as $\phi^*$.

In terms of mathematics derivative, the critical volume fraction $\phi^*$ corresponds to the value where the first degree derivative of the curve $R=f(\phi)$ is maximum or where the second degree derivative of the curve $R=f(\phi)$ is null.

According to the invention, for a volume fraction $\phi$ really below the critical volume fraction $\phi^*$, the metallic particles are dispersed preferably homogeneously in the insulating matrix. Then, for volume fraction $\phi$ near the critical volume fraction $\phi^*$, some of the metallic particles are interconnected forming thus an homogenous network of metallic particles in the insulating matrix phase.

According to the present invention, the base layer may consist of any suitable solid material. For example, it may be plastic, silicon, glass, or any conducting substrate covered by an insulating layer. The base layer is preferably a thin glass substrate.

According to one embodiment, insulating matrix phase of the metallic layer may be a polymer or a sol-gel silica, optionally containing alkaline metal ions.

The alkaline metal ions may be $Li^+$, $K^+$, or $Na^+$ ions. Preferably, they are $Na^+$ ions.

According to an embodiment, the sol-gel silica contains photocatalytic material in order to control the rate of metallic particles in the metallic layer.

According a preferred embodiment, the insulating matrix phase is mesoporous silica containing $TiO_2$ nanoparticles. According to another preferred embodiment, the insulating matrix phase is mesoporous silica containing alkaline metal ions, preferably $Na^+$ ions, and $TriO_2$. The porosity allows for the diffusion of metal salts to the vicinity of $TiO_2$ particles that are known to exhibit efficient photoreductive properties.

According to an embodiment, metallic particles are selected in the group consisting of silver, gold, palladium, platinum, cobalt and nickel particles.

According to a preferred embodiment, metallic particles are silver, gold, palladium, platinum, which are less sensible to the oxidation than cobalt or nickel.

According to an embodiment, the metallic particles have a mean diameter comprised between 1 and 500 nm, preferable between 2 and 100nm.

According to an embodiment, the composite material may comprise a further layer on the metallic layer. Said further layer may be of a similar composition as the insulating matrix of the metallic layer except the absence of the photoreductive species. Preferably, it may be mesoporous silica.

The value of the critical volume fraction $\phi^*$ depends on the insulating matrix phase nature and also on the nature of the metallic particles.

According to an embodiment, the value of $\phi^*$ is determined by a direct method comprising the following steps:

- Plotting a calibration curve $R=f(\phi)$; and
- Determining the inflection point of the curve, said inflecting point corresponding to $\phi^*$.

The inflection point may be determined by calculating $dR/d(\phi)$ since it corresponds to a maximum at this point.

According to another embodiment, in order to have a more accurate value of $\phi^*$, said value of $\phi^*$ may be determined by a method comprising the following steps:

- Plotting a calibration curve GF=f($\phi$); and
- Determining the maximum point of the curve or the point where d(GF)/d($\phi$) is null, said point corresponding to $\phi$*.

As previously mentioned, the value of a Gauge Factor of a piezoresistive material is directly linked to the variation of resistance (R) when a stress is applied on said piezoresistive material.

Thus, to carry out resistance measurements either in the method where a curve R=f($\phi$) has to be plotted or in the method where GF=f($\phi$) has to be plotted, the metallic layer of the composite material needs ohmic contacts.

Ohmic contact may be formed by different methods such as metal evaporation for example.

In order to plot the curve GF=f($\phi$), the Gauge Factor GF may be determined as follows.

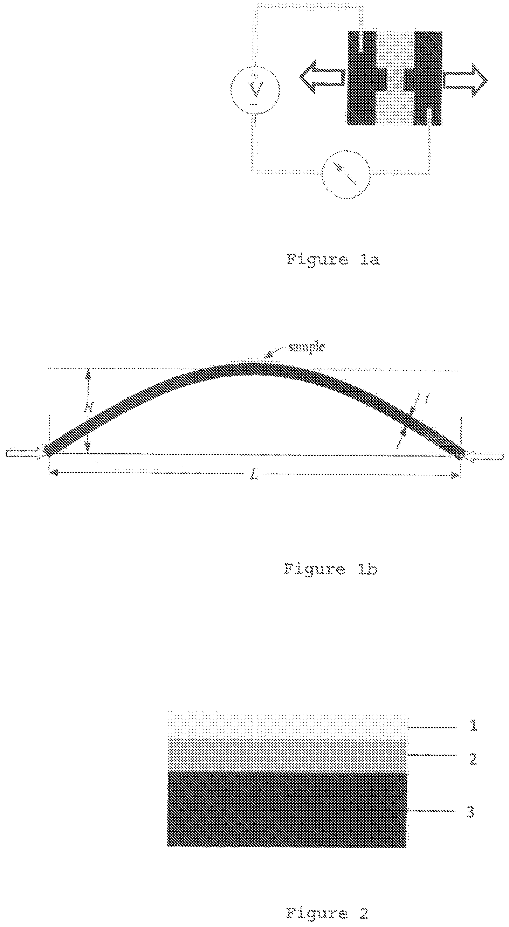

The piezoresistive material with ohmic contact shown in Figure 1a may be fixed (with glue for example) in the middle of a rectangular steel plate 4 (see figure 1b) having a length n, a width w and a thickness t.

The length n of the steel plate is comprised between 40 and 60cm, preferably between 48 and 50cm, the width w of the steel plate is comprised between 3 and 6cm, preferably between 4 and 5cm, and the thickness t of the steel plate is comprised between 0.2 and 0.8mm, preferably between 0.5 and 0.6mm in order to be at least 10 times thicker than the piezoresistive material.

When subjected to compressive forces at two ends as shown in Figure 1b, the plate is deformed to a sinusoidal shape of half-wavelength L and amplitude H. If a composite material of a thickness << t is glued to the top (bottom) face of the plate, it experiences a uniaxial tensile stress given by formula

$$\frac{\Delta l}{l} = \frac{\pi^2}{2} \cdot \frac{dH}{L^2} = \varepsilon$$

where $l$ is the initial, unstressed, length of the composite material.

Thus, the applied stress $\varepsilon$ is determined by independently measuring $L$ and $H$ and through the use of the above equation.

According to an embodiment, $\varepsilon=10^{-4}$.

The applied stress is modulated by applying different forces on the two ends of the steel plate (leading to a modulation the amplitude of the sinusoid between H1 and H2 not represented in figure 1b).

The resistance is measured at each stress level (Height denoted by H1 and H2) for determining the Gauge Factor at a given volume fraction $\phi$.

The ratio of the difference between these two resistances to the value of the resistance measured for the lower stress and then multiplied by the applied difference stress gives the value of the Gauge Factor.

The Gauge Factor for a given volume fraction $\phi$ and therefore for a specific composite material is thus given by the general formula:

$$GF = \frac{R(H2) - R(H1)}{Rav} \times \frac{1}{\Delta\varepsilon}$$

where

R(H2) represents the resistance when the steel plate has an amplitude H2
R(H1) represents the resistance when the steel plate has an amplitude H1
$R_{av}$ is the average of the two resistances R(H1) and R(H2)
$\Delta\varepsilon$ is the strain induced by the applied stress.

The resistance measurement may be carried out using a voltage source and an earthed picoammeter so that the DC resistance may be measured.

The current is preferably kept below 1$\mu$A to avoid unwanted fluctuations in the resistance measurements.

The metallic particles volume and the insulating matrix volume may be determined by different methods such as chemical analysis and film thickness analysis.

According to one embodiment, metallic particles volume may be determined by a method comprising the following steps:

- Dissolution of a given surface of the metallic layer in a given volume of solvent;

- Chemical analysis of the metal ion concentration; and
- Calculation of the initial metal loading considering the result of the analysis and the metallic film thickness.

According to one embodiment, insulating matrix volume may be determined by the volume of the metallic layer - volume of the metallic particles inside.

As mentioned above, the multilayered composite material according to the invention has a volume fraction $\phi$ which does not correspond to the critical volume fraction $\phi^*$, but to a volume fraction $\phi$ which is slightly higher than the critical volume fraction $\phi^*$.

According to the invention, the term "slightly higher" may be interpreted as included in an interval between 0 (value not included) and 5% (value included) above the critical volume fraction $\phi^*$.

$\delta\phi$ is a small positive number.

According to an embodiment, $0 < \delta\phi \leq 4\%$, preferably $0.2\% < \delta\phi \leq 3\%$ and more preferably $0.4\% < \delta\phi \leq 3\%$ and even more preferably $0.4\% < \delta\phi \leq 2\%$.

A subject of the present invention is also a process for manufacturing a multilayer composite material of the invention comprising the steps consisting in:

a) providing a base layer

b) providing on the base layer a metallic layer consisting of an insulating matrix phase and of a metallic particles phase, said metallic particles being homogeneously distributed in the insulating matrix, wherein a volume fraction $\phi$ being the ratio between the volume of metallic particles and the volume of the metallic layer corresponds to the critical volume fraction $\phi^* + \delta\phi$, with $0 < \delta\phi \leq 5\%$,; $\phi^*$ being the volume fraction for which an increase of conductivity of the metallic layer as a function of the volume fraction $\phi$ has a maximum value.

The metallic layer may be provided on the base layer according to various methods of thin film deposition from liquid solutions, as known in sol-gel process or polymer processing: spin or dip coating, blade coating, sputtering...

The composite material of the present invention may be manufactured by finely controlling the metallic particles loading in the insulating matrix.

The applicants found this fine control is possible by controlling an irradiation dose made on a layer comprising a photocatalytic material since an increase of irradiation time provides an increase in the volume fraction of metallic particle in the composite material.

Therefore, since the metal loading may be controlled by irradiation time, a very fine tuning around the percolation threshold may be carried out and this has permitted the experimental determination of a discrete number of well-defined parameters such as resistance R or the Gauge factor GF as a function of $\phi$ so as to determine the critical volume fraction $\phi^*$.

The invention proposes two main routes for attaining this very fine tuning: an *ex-situ* route and *in-situ* route.

Thus, another subject of the present invention is a process for manufacturing a multilayer composite material of the invention by an *ex-situ* route comprising the steps consisting in:

- providing a base layer
- providing on the base layer a layer comprising a photocatalytic material;
- contacting the base layer covered by the layer comprising a photocatalytic material with a solution containing metal ions selected from the group consisting of silver, gold, palladium platinum, cobalt and nickel ions, and
- irradiating the base layer covered by the layer comprising a photocatalytic material with radiation permitting activation of the photocatalytic material, for a time sufficient to have a volume fraction $\phi$ being the ratio between the volume of metallic particles and the volume of the metallic layer corresponds to a critical volume fraction $\phi^* + \delta\phi$, with $0 < \delta\phi \leq 5\%$, the critical volume fraction $\phi^*$ being the volume fraction for which an increase of conductivity of the metallic layer as a function of the volume fraction $\phi$ has a maximum value.

According to the invention, for a given base layer, for a given photocatalytic material, for a given concentration of metallic ions in the solution, for a given power of the irradiation and for a given wavelength, it is possible to plot a calibration curve $t = f(\phi)$ so as to match a time of irradiation with a volume fraction of metallic particles.

The photocatalytic material should have a large band gap material so that the absorbance band lies within the visible part of the spectrum so that photogenerated electrons have a sufficient redox potential allowing for the metal reduction.

Moreover the characteristic life time for the recombination of electron- hole pair should be significantly longer than the reaction time of electron or hole with the metal ions.

For example, the photocatalytic material may be a metal oxide or a chalcogenure that are known for their photoreduction properties.

According to a preferred embodiment, the photocatalytic material is selected from the group of metal oxides consisting of titanium dioxide, zinc oxide, bismuth oxide and vanadium oxide, tungsten oxide, iron oxide, BiFe$_2$O$_3$ or a mixture thereof or any solid solutions of thereof.

Especially preferably, the photocatalytic material is titanium dioxide TiO$_2$ because of its well-known photocatalytic properties.

The solution containing metal ions may be selected from a salt solution, for example based on nitrate, chloride, acetate, sulfate or tetrafluoroborate.

Preferred solutions are:

- a solution of silver nitrate (for Ag), or
- a solution of gold chloride (HAuCl4) (for Au), or
- a solution of palladium chloride (PdCl2) (for Pd), or
- a solution of platinum chloride (H2Ptcl6) (for Pt).
- a solution of nickel chloride (NiCl$_2$. 6H$_2$O) (for Ni) The solvent may be a water/isopropanol mixture.

The concentration of ions in the solution may be comprised between 10$^{-5}$mol and 10$^{-1}$mol, preferably between 10$^{-5}$mol and 10$^{-3}$mol.

The radiation for activating the photocatalytic material is preferably a source having a wavelength in the absorbtion band of the photocatalytic material. In particular, when the photocatalytic material is TiO$_2$, irradiation may typically be carried out by a source having a wavelength of less than approximately 380 nm, preferably 312 nm

The volume fraction of metallic particles within the matrix depends upon the total photon exposure that is determined by the intensity of the lamp and the absorption band of the photocatalytic material.

Under preferred conditions for implementing the invention, the *ex-situ* process for fabrication of the multi-layered composite material of the invention comprises the steps consisting in:

a) depositing by a sol-gel route, on a base layer, a first layer of a material, mesostructured by a templating agent, said material comprising a photocatalytic material and a material containing silica and;

b) depositing by a sol-gel route, on the first layer, a second layer of a material, mesostructured by a templating agent, said material comprising a material containing silica and being free from photocatalytic material;

c) performing a heating treatment of the first and second layers whereby a consolidated coating is obtained;

d) contacting the consolidated coating obtained in step c) with a solution containing metal ions selected from the group consisting of silver, gold, palladium platinum, nickel and cobalt ions, and

e) irradiating the base layer covered by the consolidated coating with radiation permitting activation of the photocatalytic material, for a time sufficient to reach a volume fraction $\phi$ being the ratio between the volume of metallic particles and the volume of the metallic layer corresponds to a critical volume fraction $\phi^* + \delta\phi$, with $0 < \delta\phi \leq 5\%$, the critical volume fraction $\phi^*$ being the volume fraction for which an increase of conductivity of the metallic layer as a function of the volume fraction $\phi$ has a maximum value.

The multi-layered composite material obtained by the previous described method is composed of 3 different layers. Indeed, figure 2 gives a schematic diagram of such multilayered composite material which consists of a coating of two layers on a substrate. The intermediate layer (or active layer) 2 of said coating corresponds to the porous silica film containing initially photocatalytic nanoparticles deposited onto the base layer 1, and the third layer 3 (or passivating layer) of said coating corresponds to porous silica.

The passivating layer improves the homogeneity of the metallic particles deposit by confining said particles in the active layer.

**Step a) Formation of the first layer**

The method according to the invention comprises a step a) consisting of forming by the sol-gel route, on a substrate, a first layer of a mesostructured material by a templating agent. This material initially comprises a material containing silica and a photocatalytic material.

The material containing silica and the photocatalytic material may represent, together, at least 30 wt %, preferably at least 50 wt % of said material, the remainder being formed by the templating agent and any impurities introduced by the sol-gel process.

Sol-gel processes are processes that are well known by a person skilled in the art, for forming a solid, amorphous three-dimensional network by hydrolysis and condensation of precursors in solution.

The first layer of mesostructured material, formed in step a) of the method, contains a material comprising silica, a photocatalytic material and a templating agent, preferably an organic templating agent.

Preferably, the material comprising silica represents between 0 and 45 wt % of the mesostructured material.

The templating agent preferably represents between 5 and 60 wt % of the mesostructured material. The use of templating agents for forming mesostructured or mesoporous materials is well known. This templating agent has the technical effect of forming mesopores in this material.

The term "mesopores" denotes pores with a diameter between 2 and 50 nm (nanometers). Mesoporous materials are obtained by removing the templating agent, for example by calcination.

Until the templating agent has been removed, the material is called "mesostructured", i.e. it is provided with mesopores filled with templating agent. The templating agent should be selected that there is open porosity in the film. The presence of open porosity helps the metal nanoparticles to connect with each other and hence to have a conducting path between two ohmic contacts. Open porosity also allows diffusion of the metal salt in the vicinity of the photocatalyst. The templating agent may be a polymer or a surfactant.

When the templating agent is a polymer, block copolymers are used, preferably block copolymers based on ethylene oxide and propylene oxide.

When the templating agent is a surfactant, it is preferably selected from nonionic surfactants.

Examples of nonionic templating agents that are preferred in the present invention are poloxamers, such as those marketed under the name Pluronic®.

It is also possible to use cationic surfactants, for example surfactants with a quaternary ammonium group. The photocatalyst should have a large band gap material so that the absorbance band lies within the visible part of the spectrum. More over the characteristic life time for the recombination of electron- hole pair should be significantly longer than the reaction time of electron or hole with the metal ions.

The photocatalytic material is preferably a metal oxide or a chalcogenure.

The photocatalytic material is preferably a metal oxide and is selected from the group consisting of titanium dioxide, zinc oxide, bismuth oxide and vanadium oxide, $WO_3$, iron oxide, $BiFe_2O_3$ or a mixture thereof or any solid solutions of thereof. Especially preferably, the photocatalytic material is titanium dioxide $TiO_2$.

When silica is present in the first layer, the weight ratio of photocatalytic material to silica in the first layer is between 0.05 and 2.7. Amount of silica present in the layer provides mechanical stability to the film.

When the photocatalytic material is titanium dioxide, the atomic ratio Ti/Si is preferably between 0.05 and 2, in particular between 0.5 and 1.5, and more preferably between 0.8 and 1.2 so to have an efficient and fast photocatalytic effect.

The photocatalytic material according to the invention is in the physical form that it requires so that it effectively has photocatalytic properties. For example, $TiO_2$ must be at least partially crystalline, preferably in anatase form.

According to one embodiment of the present invention, the photocatalytic material is present in the first layer in the form of particles in a silica insulating matrix. For example, the diameter of the nanoparticles is between 0.5 and 300 nm, notably between 1 and 80 nm. These nanoparticles may themselves consist of smaller grains or elementary crystallites. These particles may also be agglomerated or aggregated with one another.

According to the present invention, the base layer may consist of any suitable solid material. For example, it may be plastic material, silicon substrate, glass substrate, or any conducting substrate with an insulating layer before the first coating. The base layer is preferably thin glass substrate.

Step a) of the method according to the invention may comprise the following substeps:

i) preparing a sol containing at least one silica precursor, preferably a tetraalkoxysilane, such as tetraethoxysilane, dissolved in an aqueous-organic solvent containing a catalyst of acid or basic hydrolysis as well as the templating agent;

ii) adding photocatalytic material, preferably in the form of nanoparticles, to this sol;

iii) applying the suspension obtained on a substrate. Typically, the aqueous-organic solvent is an alcohol/water mixture, the alcohol typically being methanol or ethanol.

The sol may be applied on the substrate by techniques that are known by a person skilled in the art, for example by spin coating, by dip coating , by roll coating or by sputtering.

**Step b) Formation of the second layer**

Step b) of the method according to the invention consists of sol-gel deposition, on the first layer of a second layer of a mesostructured material by a templating agent, said mesostructured material comprising a material containing silica, and said mesostructured material being free from photocatalytic material.

In particular, the silica precursor (tetraalkoxysilane), the catalyst, the solvent and the templating agent may be the same as those used for the first layer.

The sol-gel process may also be implemented in the same way.

According to another embodiment, the first coating may be submitted to a treatment of maturation before depositing the second layer, said treatment of maturation consisting of keeping the first layer under a humid atmosphere, at room temperature, for a time between 15 minutes and 2 hours and also heating at a temperature of 110°C for 10 to 20 minutes. The relative humidity (RH) of said atmosphere is preferably between 60 and 80%.

Step b) of the method according to the invention may comprise the substeps consisting of:

i) preparing a sol containing at least one silica precursor, preferably a tetraalkoxysilane, such as tetraethoxysilane, dissolved in an aqueous-organic solvent containing a catalyst of acid or basic hydrolysis as well as the templating agent;
ii) applying this sol on the first layer, formed during step a).

According to one embodiment, this second layer is deposited in the same way as the first layer, the only difference being absence of the photocatalytic material.

**Step c): Heating treatment(s)**

According to the invention, a first heating treatment called "consolidation treatment" is carried out on the substrate covered by the first layer and the second layer. The temperature of the consolidation treatment is between 50 and 250°C, preferably between 80 and 120°C.

This consolidation treatment enables consolidating the first and the second layer and to provide a material having good chemical stability and good mechanical properties.

Then, optionally, a second heating treatment at higher temperature called "calcination treatment" may be carried out on the substrate covered by the first layer and the second layer.

The temperature of the calcination treatment, depending on the nature of the substrate is between 200°C and 450°C, preferably between 300 and 450°C for a time between 2-4 hours.

This calcination treatment enables eliminating the templating agent and other organic impurities.

This is preferred in the case where the substrate may withstand higher temperature.

**Step d) contacting the coating with a solution containing metal ions**

Step d) of the method according to the invention consists in contacting the consolidated coating, obtained in step c), with a solution containing metal ions, the metal being selected from the group consisting in Ag, Au, Pd, Pt, Ni and Co and is preferably Ag.

The solution containing metal ions may be selected from a salt solution, for example based on nitrate, chloride, acetate, or tetrafluoroborate.

Preferably, it is:

• a solution of silver nitrate (for Ag), or
• a solution of gold chloride ($HAuCl_4$) (for Au), or
• a solution of palladium chloride ($PdCl_2$) (for Pd), or
• a solution of platinum chloride ($H_2PtCl_6$) (for Pt).
• a solution of nickel chloride ($NiCl_2. 6H_2O$) (for Ni) The solvent may be a water/isopropanol mixture.

The concentration of ions in the solution may be comprised between $10^{-5}$ mol and $10^{-1}$ mol. Preferably, the concentration of ions in the solution is $5 \times 10^{-4}$ mol.

According to a first embodiment of the method of the present invention, the coating formed by superposition of the first and second layers, consolidated together, is brought in contact with the solution of metal ions, in particular by immersion, while the irradiation is carried out. This ensures a constant supply of metal ions.

According to another embodiment of the present invention, the active layer is impregnated with the desired salt and dried followed by a dry-irradiation.

According to a second embodiment of the present invention, the coating is first impregnated with the solution of metal ions, then it is rinsed and/or dried, and then irradiated. In other words, in this embodiment, the coating is not in contact with the solution of metal ions during irradiation. This embodiment offers the advantage of being easier to carry out, as irradiation may take place separately in time and in space from the solution with the coating and allows for in situ monitoring the GF. However, it is necessary for sufficient metal ions to be introduced into the coating, prior to the irradiation step, so that the volume fraction $\phi^* + \delta\phi$, with $0 < \delta\phi \leq 5\%$ may be reached.

The aim of the invention is to provide a composite material having a high sensitivity. This high sensitivity is directly correlated to a figure of merit F of the composite material. Indeed, the highest figure of merit F as possible is desired in the composite material of the present invention.

According to the invention, the figure of merit is defined as F= <GF>/$\sigma_{GF}$, where <GF> denotes the mean gage factor (signal) and $\sigma_{GF}$ is the fluctuation in measuring each values of GF in the experiment (noise).

Experimental data have shown that the maximum figure of merit does not correspond to $\phi^*$ but to $\phi^* + \delta\phi$, with $0 < \delta\phi \leq 5\%$.

Therefore, another object of the present invention is a process for manufacturing a multilayer composite material of the invention comprising the steps consisting in:

a) providing a base layer

b) providing on the base layer a layer comprising a photocatalytic material;

c) contacting the base layer covered by the layer comprising a photocatalytic material with a solution containing metal ions selected from the group consisting of silver, gold, palladium platinum, cobalt and nickel ions, and

d) irradiating the base layer covered by the layer comprising a photocatalytic material with radiation during a time t

e) matching the time t of irradiation with a volume fraction $\phi$ with a calibration curve t=f($\phi$)

f) Measuring GF with the following formula

$$GF = \frac{\Delta R}{R0}\frac{1}{\Delta\varepsilon}$$

wherein

*ΔR* is the difference of the resistance measured on a sample corresponding to a difference of applied stress on said sample;

R0 is the resistance measured on a sample under no stress; and

*Δε* is the strain induced by the applied stress.

g) repeating m times the measure of GF for calculating the average of GF given by the general formula

$$< GF >= \frac{1}{m}\sum_{j=1}^{m} GFj$$

h) Measuring the standard deviation of GF measurements with the following formula;

$$\sigma GF = \sqrt{\frac{[\sum(GFj)-< GF >]2}{m}}$$

i) Measuring the figure of merit F with the following formula

$$F = \frac{< GF >}{\sigma GF}$$

j) Measuring dF/d$\phi$.

k) if dF/d$\phi$=0; the maximum value of F Fmax is obtained and the irradiation is stopped

l) if dF/d$\phi$ > 0; irradiating the composite material during a further time and repeating the steps b) to j) until the requirement of step k)is fullfiled.

In the above described method, the Gauge Factor GF may be determined in the same way as described previously. According to this embodiment, in order to calculate the average of the Gauge Factor <GF>, the measure of GF is performed over m cycles.

According to the invention, m is comprises between 100 and 500, preferably between 200 and 300.

Under other preferred conditions for implementing the invention, the metallic layer may be provided on the base layer with method such as spin coating, dip coating, roll coating or by sputtering.

The composite materials according to the invention have advantageous piezoelectric properties.

Indeed, experimental data have shown that the best way to use the composite material according to the invention is to use a composite material exhibiting a volume fraction of metallic particles which does not correspond to a maximum value of the Gauge factor (i.e at the percolation threshold) but slightly above said percolation threshold corresponding to the volume fraction $\phi^* + \delta\phi$, with $0 < \delta\phi \leq 5\%$, wherein a maximum value of the figure of merit Fmax is obtained.

Therefore, another object of the present invention is the use of a piezoresistive material according to the invention or obtained by the method according to the invention as a strain gauge.

Strain gauges may be used to directly measure strain, or to measure some other transduced quantity.

Another object of the present invention is a process for determining strain on a sample comprising the steps consisting of:

- placing a composite material according to the invention having a given Gauge Factor on a material solicited by a stress;
- determining the resistance variation of the composite material;
- measuring the strain induced in solicited material

Example applications where an order-of-magnitude increase in sensitivity may enable the use of strain gauges include but are not limited to: i) real-time measurement of small strains in structural components such as parts of buildings and fuselage components on aircraft, ii) point-of-care medical systems such as blood pressure and heart rate monitors and iii) surface quality control on production lines using fully automated atomic force microscopes.

Specifically :

i) the ability to log very small strains in structural components may be used to predict future structural failure, enabling either the re-design or replacement of components before failure. The example of aircraft fuselage components is particularly telling: commercial aircraft lose money while on the ground, and a large fraction of the time spend on the ground is for maintenance and verification of the mechanical integrity of various parts of the aircraft. The ability to log mechanical stresses in real time (i.e. in flight), avoids the necessity to verify individual parts on the ground.

ii) a major application of interest to manufacturers of strain gauges is point-of-care (i.e in the home etc...) medical systems. Here small pressure changes (and thus small strains) must be measured by a pressure transducer with strain gauge placed, for example, on the skin. These pressure changes may be below those which may easily be measured using conventional silicon strain gauges.

iii) quality control of surfaces (roughness, planarity, etc) is important in many industries, including in the semiconductor industry where automated atomic force microscopes are used. These machines use microcantilevers whose motion due to surface topographic variations is detected using reflected laser light. When cantilevers inevitably break, they must be replaced by a robot and alignment of both the incident laser and the reflected light detector must be accomplished automatically. This is a complex task which requires expensive instrumentation to accomplish. Detection of reflected light is the preferred solution because cantilever movements corresponding to nanometer scale variations in topography may be measured. This is outside the range of what is possible with commercial silicon strain gauges, but the composite material of the present invention has sufficient sensitivity to detect such variations. Electrical detection of cantilever motion eliminates the need for the complex alignment procedures discussed above.

Moreover, the multilayered composite material of the invention is particularly interesting in nano-electromechanical systems and for low power remote application where electrical power supply is limited.

Indeed, the power consumed in a resistance R placed in a Wheatstone bridge with input voltage, $V_{in}$, is proportional to $V_{in}^2/R$. The output voltage of the bridge is proportional to $V_{in}GF$, where GF is the gauge factor of the strain sensor in the active arm of the bridge. In this invention the gauge factor at the optimal filling factor is of the order of 1000, a factor of 10 higher than the best silicon strain gauges. Thus, instead of using the gauge for its high sensitivity, it is possible to maintain the output voltage with $V_{in}$ a factor of 10 smaller than that used with a silicon strain gauge. In this case, for resistors with the same resistance, the consumed power is a factor of 100 smaller than in the case of a silicon strain gauge. This is attractive for mobile or remote applications where battery life is important. Examples include accelerometers in handheld mobile devices and stress monitoring in remote infrastructure such as rail networks.

However, in the above *ex-situ* process for manufacturing the multilayer composite of the invention, the electrical measurements are to be made after each step of incorporation of metallic particles in the insulating layer, which leads to a very lengthy procedure for obtaining a fine tuning.

Indeed, in the *ex-situ* method, the substrate coated with the first and second layers has to be contacted with the solution containing the metallic ions, then to be irradiated, rinsed with water and dried before performing a resistance measurement, and that as many times as necessary until reaching the wanted value of $\phi$.

It is why the invention also proposes an *in-situ* route for manufacturing the multilayer composite material of the invention.

In this route, the electrical measurements are performed at the same time as the formation of the metallic particles in the insulating layer, without having to stop either the incorporation of the metallic particles or the electrical measurement at any time.

Thus, by this *in-situ* route, a very precise tuning of the volume fraction of metallic particles is achieved, enabling to determinate accurately the best volume fraction.

The *in-situ* process of the invention comprises the same steps as the ex-situ process of the invention, except that metallic ions are inserted in the film prior to their photoreduction through an ion exchange process. This enables to perform the electrical measurement simultaneously with the photoreduction.

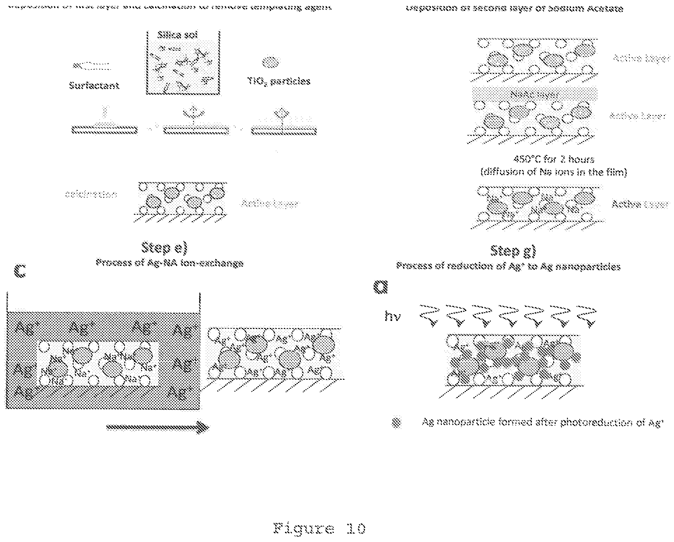

The *in-situ* process of the invention is schematically illustrated in figure 10.

In figure 10, the metallic particles are Ag particles.

However, it will be clear for the man skilled in the art that the metallic particles may be any other metal particles, as defined in the present invention for the ex-*situ* process.

Reverting to figure 10, the *in-situ* process of the invention comprises, as a first step, a step a) of depositing, by a sol-gel route, on the base layer, a first layer of a material, mesostructured by a templating agent, said material comprising a photocatalytic material and a material containing silica.

The second step is a step b) of performing a heating treatment of the first layer deposited in step a). After step b), a consolidated coating is obtained.

In figure 10, step b) is a step of calcination at 450°C for removing the templating agent.

In figure 10, the templating agent which has been used is a surfactant PE6800® mixed with Ethanol.

Of course, the duration and temperature of the heating treatment will depend on the templating agent which is used.

The third step of the *in-situ* process of the invention is step c) of depositing over the first layer a second layer containing alkaline metal ion.

This is performed by depositing over the first layer, a layer of a solution containing alkaline metal ions and an organic group, for example carboxylate, sulfonate, polyacrylate, polysulfonate, etc... group, preferably acetate group. The alkaline metal ions may be $Li^+$, $K^+$, or $Na^+$.

In the invention, $Na^+$ ions are preferred.

More preferably, the solution which is deposited over the first layer is a solution containing sodium acetate.

Indeed, such a solution of sodium acetate enables to very easily obtain an homogeneous film over the first layer.

Then, in step d), removing the organic group contained in the solution deposited on the first layer is performed.

When the matrix of the first layer is made of an organic polymer, step d) may be a step of washing of the stack of layers obtained in step e), this washing being carried out with a solution appropriate for dissolving and draining out the organic group contained in the solution deposited over the first layer.

When the matrix of the first layer is made of silica, step d) is a step of calcination of the stack of layers obtained in step e). In addition, this calcination allows homogeneous diffusion of the alkaline metal ion within the first layer.

After step d), the alkaline metal ions are diffused in the first layer, as shown in figure 10.

Then, as shown in figure 10, and in a step e), the stack of layers obtained in step d) is immersed in a solution containing metal ions.

The metal ions are selected from the group consisting of silver, gold, palladium, platinum, nickel and cobalt ions.

Preferably, $Ag^+$ ions are selected because they easily exchange with $Na^+$ ions and because they are easily photoreduced.

The temperature and the duration of the ion exchange process of step e) depends on the efficiency of the exchange process.

For example, one hour may be sufficient at 90°C for exchanging $Na^+$ ions by $Ag^+$ ions. But, this ion process exchange may also be carried out at room temperature, i.e. at a temperature comprised between 15°C and 35°C. In this latter case, more time is needed.

Once, the ion exchange process is completed, the stack of layers obtained in step e) is rinsed, for example with water, and dried, for example at room temperature (15-35°C), in step f) (not represented in figure 10).

Then, the metal ions are submitted to a process of reduction. This reduction of the metal ions is the aim of step g) of the *in-situ* process of the invention.

This reduction may be carried, for example, by irradiating the base layer covered by the layer obtained in step f) with radiation permitting activation of the photocatalytic material (in case of figure 10, $TiO_2$ particles).

Preferably, the energy of the incident radiation is within the band gap of the photocatalytic material. The radiation is carried out for a time sufficient to reach a volume fraction $\phi$, which is the volume fraction of metallic particles to reach $\phi^* + \delta\phi$, with $0 < \delta\phi \leq 5\%$, the critical volume fraction $\phi^*$ being the volume fraction for which the composite undergoes insulator to metal transition.

Figure 1a is schematic diagram of a coating (top view) showing the electrical connections and the direction of the applied stress,

Figure 1b is a side view of the principle used to apply a stress on the piezoresistive material in order to test its piezoresistive properties as a function of $\phi$,

Figure 2 is a schematic view (cross section) of a piezoresistive material obtained by a method according to the invention,

Figure 3 is a curve representing R=f($\phi$),

Figure 4 is a curve representing GF=f($\phi$),

Figure 5 is curve showing the plot of the gauge factor GF (bottom panel), the standard deviation (middle panel) and the figure of merit F (top panel) versus the volume fraction $\phi$,

Figure 6 is a top view of the coating with ohmic contacts,

Figure 7 is a top view of the coating at several different UV exposure times,

Figure 8 is calibration curve showing the plot of absorbance versus the volume fraction,

Figure 9 is a curve showing the plot of absorbance and the brightness versus the time of irradiation,

Figure 10 schematically describes the different steps of the *in-situ* process of the invention,

Figure 11 is a curve representing the variation of resistance (Ohm) as a function of $\phi$(%) obtained with the multilayer composite material obtained by the *in-situ* process of the invention,

Figure 12 is a TEM (Transmission Electron Microscopy) image of a cross section of another multilayer composite material obtained by the *in-situ* process of the invention, and,

Figure 13 is a SEM (Scanning Electron Microscopy) image of a cross section of another multilayer composite material obtained by the *in-situ* process of the invention.

The invention will now be described by means of the following Examples

## EXAMPLES

### Example 1. Manufacturing of the multilayered composite material according to the invention

*From step a) to step c) formation of the coating and treatment of saturation*

Solution (1) is obtained by mixing the following compounds and heating the resulting mixture at 60°C under reflux and mixing for 1 hour

- 11 mL of TEOS (tetraethoxysilane)(precursor)
- 11 mL of ethanol (aqueous organic solvent)
- 4,5 mL of HCl at pH=1,25 (catalyst)

Solution (2) is obtained by dissolving 2,205 g of BASF Pluronic® PE6800 in 20 mL of ethanol
Solution (3) is obtained by addition of 10 mL of solution (1) into solution (2).

Solution (3) is then filtered with a 450 nm NYLONfilter. To 4 mL of filtered solution (3) is added.
857mL of TiO2 S5-300A colloidal suspension (Cm = 231 g/L) supplied by Crystal Global.
The resulting mixture is then mixed.
This solution is deposited on a soda-lime glass substrate (thickness 20$\mu$m) by spin coating (2000 rpm for 1 minute). A substrate coated with a first layer is thus obtained and is kept under a humid atmosphere (HR = 65%) using a saturated solution of magnesium acetate for 30min.
A further layer is then deposited onto the first layer using solution (3). Deposition is achieved by spin coating under the same conditions as for the deposition of the first layer, including the storage under controlled humidity atmosphere.
The first and second layers are called "coating".
A substrate coated with the coating is then heated at 450°C for 2 hours whereby a consolidated coating is obtained.

*Step d) Contacting the coating with a solution containing metallic ions and step e) irradiating said coating to reach $\phi$*+ 0,3%*

A drop of AgNO3 solution is placed so that it could cover the active area of the coating (i.e region C on figure 2). The coating was then irradiated with UV light (wavelength of 312 nm, and Power = 1 mW/cm[2)] for different times.

For each time of irradiation, the coating was then rinsed with water and dried before performing a resistance measurement.

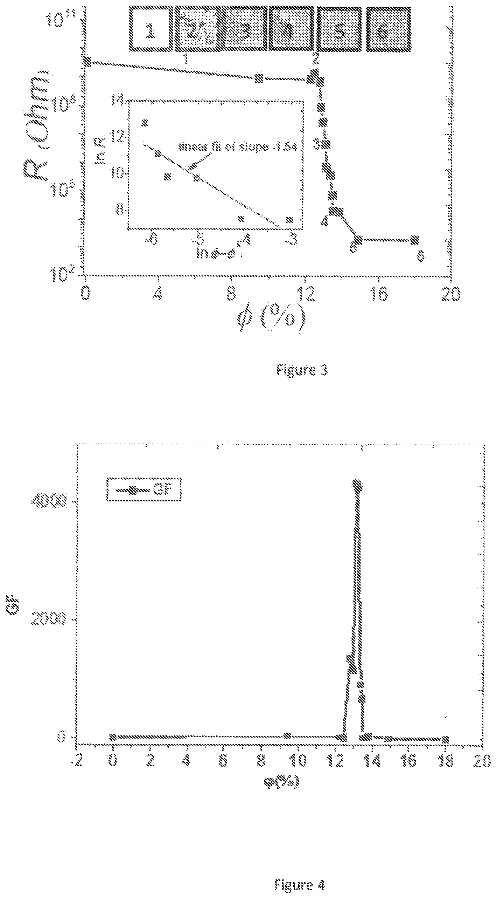

In order to determine $\phi^*$, a calibration curve R=f($\phi$) has been plotted (see figure 3).

The figure 3 shows a very sharp transition (points 3, 4 and 5) from a highly resistive region (points 1 and 2) to conducting region (point 6) for $\phi$ between 12.5 % and 13.5 %. With this method, $\phi^*$ is estimated around 13%.

In order to have a more accurate value of $\phi^*$, a calibration curve GF= f($\phi$) has been plotted (see figure 4). Figure 4 clear cut and very sharp peak in GF is observed, with a maximum value (4330) at $=\phi^* = 13.1$ % (corresponding to a time of irradiation of 15 minutes at a power of $1mW/cm^2$) well above that of bulk or nano-structured silicon.

From these determined value $\phi^*$ obtained from the curve GF= f($\phi$), it is possible to manufacture the multilayered composite material of the invention by adding 0.3% to the value of $\phi^*$, corresponding to an illumination time of 15 minutes and 20 seconds.

**Example 2: Correlation with the maximum value of the figure or merit F**

The sample obtained in step d) of Example 1 was irradiated for various times.

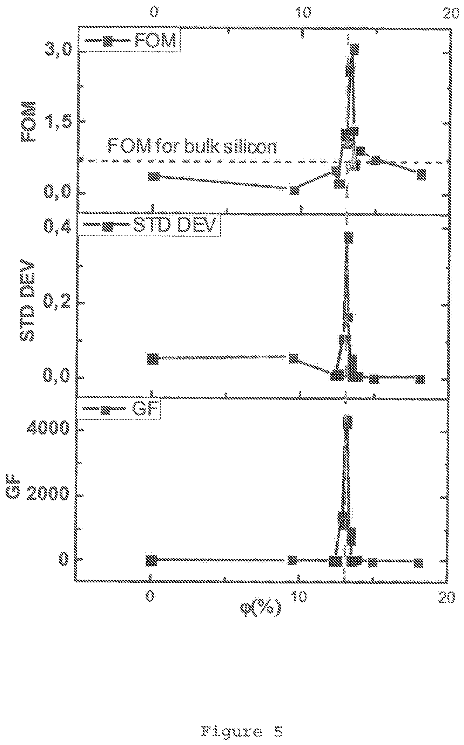

The values of the Gauge Factor, standard deviation of the Gauge Factor and the figure of merit plotted for a well discrete number of well-defined $\phi$ values (corresponding to a given time of irradiation - see above the correlation between the time of irradiation and the volume fraction) are shown in figure 5.

As shown in figure 5(bottom panel), a clear cut and very sharp peak in *GF* is observed, with a maximum value (4330) at $\phi = \phi^* \sim 13.1$ % (corresponding to a time of irradiation of 15minutes at a power of $1mW/cm^2$) well above that of bulk or nano-structured silicon. In other samples, values of up to ~12000 have been observed (data not shown). Here the peak of GF occurs close to the 16 % expected for 3-dimensional continuum percolation in a randomly distributed network of spheres.

Figure 5(middle panel) shows $\sigma_{GF}$ measured as a function of $\phi$ and, as expected, it does indeed show a maximum at $\phi^*$. Here the measurement of *GF* is repeated 200 times so that the value of $\sigma_{GF}$ is reliable. $\sigma_{GF}$ is also found to obey a power law of exponent 0,97 (data not shown), close to the expected value near $\phi^*$.

The figure of merit F (or FOM) versus irradiation time may then be plotted as shown in figure 5 (top panel), and a number of important points are of interest on this calibration curve.

The first point is that *FOM (Figure Of Merit)* is not maximized at $\phi^*$ but rather at $\phi^* + 0.3\%$ i.e. slightly on the conducting, metallic side of the percolation threshold.

Thus, in this example, Fmax is reached for an irradiation time corresponding to 15 minutes and 20 seconds (i.e for a volume fraction of 13.4%).

The peak value of *FOM* determined here is 3 which is approximately 5-10 times higher than the *FOM* value measured in bulk silicon (see respectively the dashed horizontal line in the top panel of Figure 4 which was measured separately). Therefore, according to the invention, it is possible to know that an optimized piezoresistive material (having the same material and being prepared by the same way as for the piezoresistive material for which a calibration curve F=f($\phi$) has been obtained) may be obtained for an illumination time of 15 minutes and 20 seconds at a wavelength of 312 nm at power 1 $mW/cm^2$.

**Annexed experimental parts of examples 1 and 2: ohmic contact preparation for resistance measurements, gauge factor measurements, correlation between the volume fraction of metallic particles and the irradiation time.**

*Ohmic Contact preparation technique:*

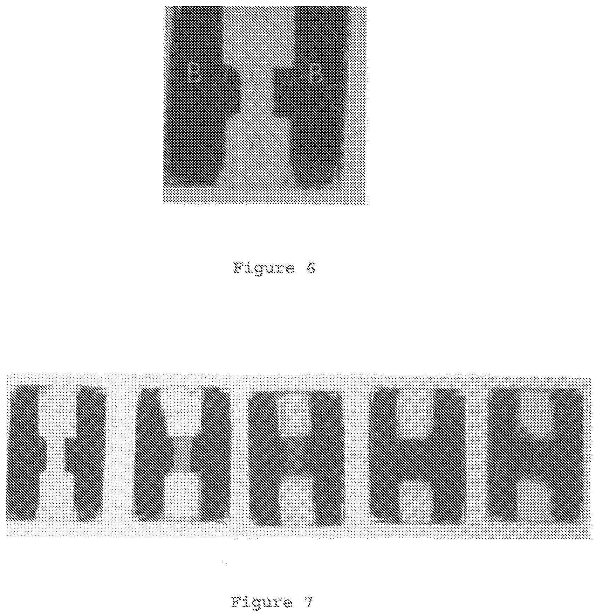

In view of performing the resistance measurements to determine the value of the resistance or the value of the Gauge Factor as a function of $\phi$, it is necessary to form ohmic contacts on the coating. To this end, the coating is first masked using Kapton® mask at the center (region A and the active area of the film shown by region C in Figure 6).

The unmasked parts (region B in Figure 6) are loaded with silver by immersing the coating in an aqueous solution of $AgNO_3$ 0,05M: isopropanol mixture (1:1 volume ratio).

Irradiation is then performed with UV light (312nm,1mW/cm2 for 50 minutes) leading to the photocatalytic reduction of Ag+ ions into metallic silver particles. The irradiation time ensures the loading of silver in the coating up to saturation, i.e. about 18 vol%. After rinsing and drying of the coating, the silver loaded patterns form the two conducting terminals as shown schematically in Figure 6.

In a further step, the coating of the unexposed area (region A in figure 6) (initially under the kapton mask) except the central area (region C in figure 6) of the sample (5 mm x 5 mm square) is removed mechanically by scratching. The remaining central area (C) between the two conducting terminals (B) is the active area of interest, whose electrical properties are measured.

Finally, the two conducting terminals (B) are connected to external copper wires using silver paints.

*Determination of the parameters: GF, <G> and $\sigma GF$*

The sample with the ohmic contact as shown in figure 1a is glued at the center of a steel plate as shown schematically in figure 1b (length= 50 cm, thickness = 0,6 mm and width = 5cm) with a cyanolit® 202 glue.

A compressive force is applied to the two ends of the steel plate. The plate deforms into a sinusoidal shape of half-wavelength L and amplitude H. As a result, the piezoresistive material undergoes an uni-axial tensile stress.

The applied stress is modulated (by modulating the force applied to the two ends of the steel plate). The amplitude of the sinusoid between H1 and H2 is then obtained over 200 cycles.

The DC resistance is measured using a voltage source and an earthed pico-ammeter.

The current is always kept below $1\mu A$ to avoid unwanted fluctuations in the resistance measurements.

The resistance is measured at each stress level (Height denoted by H1 and H2), named respectively R(H1) and R(H2).

The Gauge Factor (GF) is measured by taking the ratio of the difference in the resistances in each cycle to the value of the resistance R(H1) and R(H2) measured for the lower (R(H1)) stress in the same cycle and the multiplied by the applied stress difference.

$$GF = \frac{R(H2) - R(H1)}{Rav} \times \frac{1}{\Delta \varepsilon}$$

The measure is then repeated for 200 cycles and the average value of GF is calculated.

$$< GF >= \frac{1}{m} \sum_{j=1}^{m} GFj$$

With the <GF> value, it is then possible to calculate the standard deviation $\sigma GF$ and then to determine $F_{GF}$.

$$\sigma GF = \sqrt{\frac{[\sum(GFj) - < GF >]2}{m}}$$

To make the correlation between time of irradiation and volume fraction $\phi$, the image of the sample at various irradiation times (corresponding to different volume fractions) is shown in Figure 7). Increasing the silver loading provides an increased absorption of the films which exhibit a yellow to dark brown color.

In a previous work, an experimental curve was made plotting the absorbance at different wavelength as a function of the silver loading, $\phi$ as determined by chemical analysis. Chemical analysis was achieved by dissolving with nitric acid the silver particles located in a silver loaded film of a known area and thickness.

The solution is then analyzed for its silver ions content by ICP. The results enable to calculate the initial silver volume fraction in the film.

Knowing the absorbance versus $\phi$ curve, it is possible to determine the silver loading in a film after measuring its absorption.

Images of the samples for various irradiation times were taken (maintaining the same focusing and light condition).

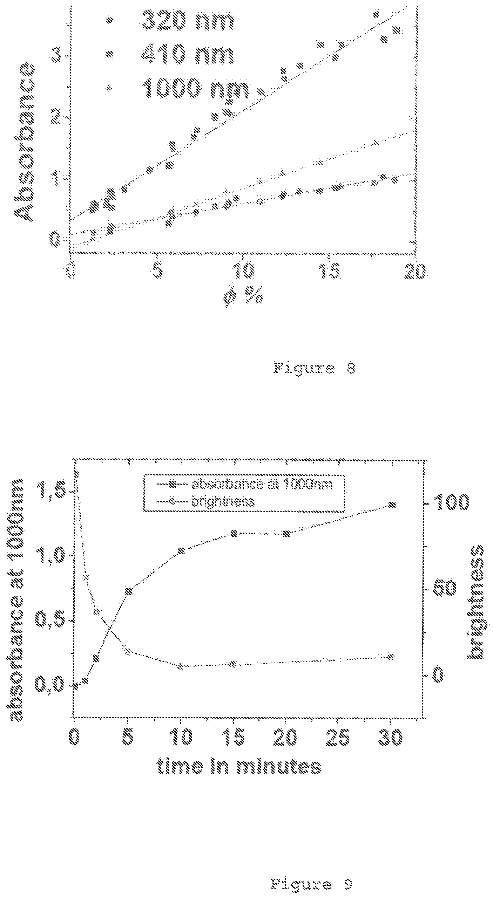

A second curve was experimentally determined, plotting the brightness of the active area (C) as quantified using the imageJ software (Figure 9) as a function of the irradiation time. The brightness is defined as the mean of the histogram of the distribution of the gray values.

Using the previously determined absorbance versus volume fraction curve (figure 8), one thus may determine the silver loading as a function of the brightness of the active area which is directly linked to the time of irradiation.

### Example 3: Comparison between the figure of merit of commercial strain gauges and the figure of merit of a composite according to the invention

The figure of merit of two commercial strain gauges (one metallic gauge and one silicium gauge (Si gauge)) was calculated from the average of gauge factor <GF> and standard deviation $\sigma_{GF}$ (which are well-known from the user) with the following formula F=<GF>/ $\sigma_{GF}$.
The figure of merit of the composite material obtained according to example 1 was calculated and compared with the figures of merit of commercial gauges.
The results are summarized in the following table.

|  | G (expected) = <G>$\pm\sigma_G$ (for a operating strain of $1*10^{-4}$) | F = <G>/$\sigma_G$ |
|---|---|---|
| Composite material according to example 1 | $1000\pm330$ | 3 |
| Metallic gauge *Type*: KFG-1-120-C1-11. | $2.11\pm3.51$ | 0,6 |
| Si gauge *Type* : SS-060-040-2500-PM | $140\pm200$ | 0,7 |

The above table underlines that the figure of merit of the composite material according to the invention is 6 times higher than the figure of merit of metallic and silicium gauges.
Therefore, the composite material according to the invention is more sensitive than the commercial strain gauges.

### Example 4 : Manufacturing of multilayer composite materials according to the invention by the *in-situ* process.

Solution (1) is obtained by mixing the following compounds and heating the resulting mixture at 60°C under reflux and mixing for 1 hour

- 11 mL of TEOS (tetraethoxysilane)(precursor)
- 11 mL of ethanol (aqueous organic solvent)
- 4,5 mL of HCl at pH=1,25 (catalyst)

Solution (2) is obtained by dissolving 2,205 g of BASF Pluronic® PE6800 in 20 mL of ethanol
Solution (3) is obtained by addition of 10 mL of solution (1) into solution (2).

Solution (3) is then filtered with a 450 nm NYLONfilter.
To 4 mL of filtered solution (3) is added.
857mL of TiO2 S5-300A colloidal suspension (Cm = 231 g/L) supplied by Crystal Global.
The resulting mixture is then mixed.
This solution is deposited on a soda-lime glass substrate (thickness $20\mu$m) by spin coating (2000 rpm for 1 minute). A substrate coated with a first layer is thus obtained and is kept under a humid atmosphere (HR = 65%) using a saturated solution of magnesium acetate for 30min.
Of course, the substrate may also be a silicon wafer instead of soda-lime-glass.
After deposition, calcination was performed for 2 hours at 450°C. Then 0,4 ml of Na-acetate solution (4gm in 1-ml ETOH and 2 ml H2O) was spin coated over the porous layer. Calcination was then performed for 2 hours at 450°C. This allows the acetate groups to be removed and the sodium ions to diffuse inside the porous matrix.

Process of Silver photoreduction

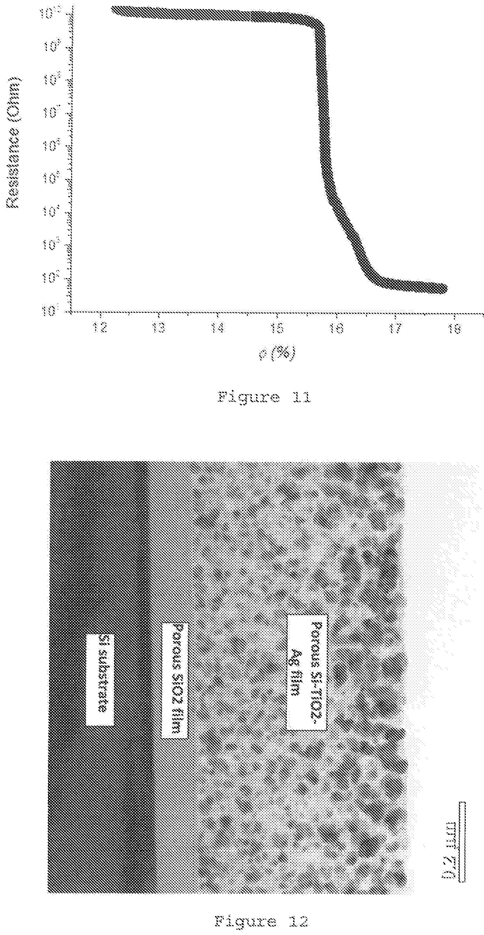

Process of photoreduction was achieved in two steps: 1. Metal ion exchange, and 2. Metal ion reduction. Ion exchange process was achieved by immersing the films into a AgNO$_3$ (4gm for 100 ml) solution of isopropanol and water ( 8:2 ratio) at 90°C for 1 hour. This allows the silver ions to diffuse inside the porous matrix and exchange with the sodium ionsAfter rinsing with water and drying under blowing nitrogen, the samples were irradiated with UV lamp (312nm, 4,5mW/cm2). Initially the samples turn brown and after 3 hours of irradiation a shining metallic silver colour of the sample is obtained.
During the photoreduction process, the resistance has been measured continuously. Figure 11 shows the obtained curve.

When comparing figure 11 and figure 3, one can see that with the *in-situ* process of the invention, a finer tuning is obtained than with the *ex-situ* process of the invention.

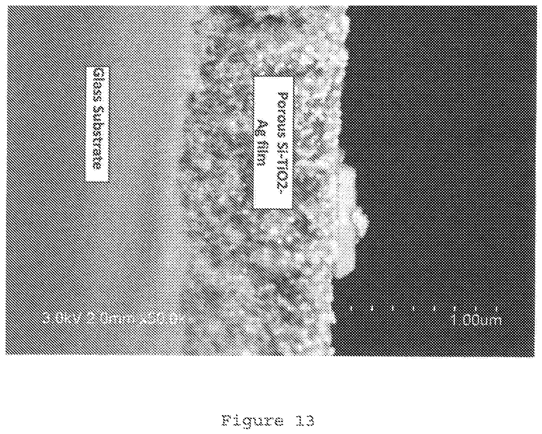

Figure 12 shows the TEM image of a cross section of the multilayer composite material obtained by the *in-situ* process of the invention wherein the base layer is a silicon substrate and figure 13 shows a SEM image of a cross section of a multilayer composite material obtained by the *in-situ* process of the invention wherein the base layer is a glass substrate.

Indeed, the base layer (substrate) may be made of glass, silicon or any other material. In the present example, the substrate is made of glass.

As can be seen in figures 12 and 13, the multilayer composite material of the invention comprises a metallic layer which consists of an insulating matrix phase with a metallic particle phase inside the insulating matrix.

Here, the insulating matrix is silica obtained by the sol-gel process containing some residual alkaline metal ions.

## Conclusions

The method according to the invention underlines that the best way to use a composite as a strain gage is therefore to use a composite material exhibiting a volume fraction of metallic particles which do not correspond to a maximum value of the Gauge factor (i.e at the percolation threshold) but slightly above said percolation threshold corresponding to a maximum value of the figure of merit Fmax.

It is shown that because fluctuations in GF diverge at $\phi^*$ (i.e higher standard deviation at this point), use of any composite at the percolation threshold ($\phi^*$) is not recommended. It is shown experimentally that the optimal Ag volume fraction lies less than 1 % to the metallic, conducting side of $\phi^*$. In this case a figure-of-merit for a nano-composite strain gage is shown to be 5-10 times larger than the equivalent in commercial strain gages. The optimal exploitation of composites as strain gauges therefore requires the ability to finely control the metallic volume fraction.

## Claims

1.  A multilayer composite material comprising:

    - a base layer (1)
    - a metallic layer (2) consisting of an insulating matrix phase and of a metallic particles phase, said metallic particles being distributed in the insulating matrix, **characterised in that** a volume fraction $\phi$ being the ratio between the volume of metallic particles and the volume of the metallic layer corresponds to a critical volume fraction $\phi^* + \delta\phi$, with $0 < \delta\phi \leq 5\%$, the critical volume fraction $\phi^*$ being the volume fraction for which an increase of conductivity of the metallic layer as a function of the volume fraction $\phi$ has a maximum value.

2.  The multilayer composite material according to claim 1, wherein metallic particles are selected in the group consisting of silver, gold, palladium, platinum, cobalt and nickel particles.

3.  The multilayer composite material according to claims 1 or 2, wherein the diameter of the metallic particles is comprised between 1 and 500nm.

4.  The multilayer composite material according to any one of claim 1-3, wherein the value of $\phi^*$ is determined by a method comprising the following steps:

    - Plotting a calibration curve R=f($\phi$); and
    - Determining the inflection point of the curve, said inflection point corresponding to $\phi^*$.

5.  The multilayer composite material according to any one of claim 1-3, wherein value of $\phi^*$ is determined by the method comprising the following steps:

    - Plot a calibration curve GF=f($\phi$); and
    - Determining the maximum point of the curve or the point where d(GF)/d($\phi$) is null, said point corresponding to $\phi^*$.

6.  The multilayer composite material according to any one of claim 1-5, wherein $0 < \delta\phi \leq 4\%$.

7.  A process for manufacturing a multilayer composite material according to any one of claims 1-6 comprising the steps consisting in:

a) providing a base layer,

b) providing on the base layer a metallic layer consisting of an insulating insulating matrix phase and of a metallic particles phase, said metallic particles being distributed in the insulating matrix, wherein a volume fraction $\phi$ being the ratio between the volume of metallic particles and the volume of the metallic layer corresponds to a critical volume fraction $\phi^* + \delta\phi$, with $0 < \delta\phi \leq 5\%$, $\phi^*$ being the volume fraction for which an increase of conductivity of the metallic layer as a function of the volume fraction $\phi$ has a maximum value.

8. The process according to claim 7 wherein step b) comprises the step consisting in:

- providing on the base layer a layer comprising a photocatalytic material;
- contacting the base layer covered by the layer comprising a photocatalytic material with a solution containing metal ions selected from the group consisting of silver, gold, palladium platinum, cobalt and nickel ions, and
- irradiating the base layer covered by the layer comprising a photocatalytic material with radiation permitting activation of the photocatalytic material, for a time sufficient to have a volume fraction $\phi$ being the ratio between the volume of metallic particles and the volume of the metallic layer corresponding to a critical volume fraction $\phi^* + \delta\phi$, with $0 < \delta\phi, \leq 5\%$, $\phi^*$ being the critical volume fraction for which an increase of conductivity of the metallic layer as a function of the volume fraction $\phi$ has a maximum value.

9. The process according to claim 8 comprising the steps consisting in:

a) depositing by a sol-gel route, on a base layer, a first layer of a material, mesostructured by a templating agent, said material comprising a photocatalytic material and a material containing silica and;

b) depositing by a sol-gel route, on the first layer, a second layer of a material, mesostructured by a templating agent, said material comprising a material containing silica and being free from photocatalytic material;

c) performing a heating treatment of the first and second layers whereby a consolidated coating is obtained;

d) optionally calcination of the first and second layers for removing the templating agent,

e) contacting the consolidated coating obtained in step c) with a solution containing metal ions selected from the group consisting of silver, gold, palladium platinum, nickel and cobalt ions, and

f) irradiating the base layer covered by the consolidated coating with radiation permitting activation of the photocatalytic material, for a time sufficient to have a volume fraction $\phi$ being the ratio between the volume of metallic particles and the volume of the metallic layer corresponding to a critical volume fraction $\phi^* + \delta\phi$, with $0 < \delta\phi, \leq 5\%$, $\phi^*$ being the critical volume fraction for which an increase of conductivity of the metallic layer as a function of the volume fraction $\phi$ has a maximum value.

10. The process according to claim 7 wherein step b) comprises the steps consisting in:

b) providing on the base layer a first layer comprising a photocatalytic material;

c) contacting the base layer covered by the first layer comprising a photocatalytic material with a solution containing metal ions selected from the group consisting of silver, gold, palladium platinum, cobalt and nickel ions, and

d) irradiating the base layer covered by the first layer comprising a photocatalytic material with radiation during a time t

e) matching the time t of irradiation with a volume fraction $\phi$ with a calibration curve t=f($\phi$)

f) Measuring GF with the following formula

$$GF = \frac{\Delta R}{R0} \frac{1}{\Delta \varepsilon}$$

wherein

$\Delta R$ is the difference of the resistance measured on a sample corresponding to a difference of applied stress on said sample;

R0 is the resistance measured on a sample under no stress; and

$\Delta \varepsilon$ is the strain induced by the applied stress.

g) repeating m times the measure of GF for calculating the average of GF according to the general formula

$$< GF >= \frac{1}{m}\sum_{j=1}^{m} GFj$$

h) Measuring the standard deviation of GF measurements with the following formula;

$$\sigma GF = \sqrt{\frac{[\sum(GFj) - < GF >]2}{m}}$$

i) Measuring the figure of merit F with the following formula

$$F = \frac{< GF >}{\sigma GF}$$

j) Measuring $dF/d\phi$.
k) if $dF/d\phi=0$; the maximum value of F Fmax is obtained and the irradiation is stopped
1) if $dF/d\phi > 0$; irradiating the composite material during a further time and repeating the steps b) to j) until the requirement of step k) is fulfilled.

11. The process according to anyone of claims 8-10, wherein the photocatalytic material is selected from the group of metal oxides consisting of titanium dioxide, zinc oxide, bismuth oxide and vanadium oxide, tungsten oxide, iron oxide, $BiFe_2O_3$ or a mixture thereof or any solid solutions of thereof.

12. The process according to claim 7 wherein step b) comprises the steps consisting in:

a) depositing by a sol-gel route, on the base layer, a first layer of a material, mesostructured by a templating agent, said material comprising a photocatalytic material and a material containing silica and;
b) optionally performing a heating treatment of the first layer;
c) depositing over the first layer a second layer of a solution containing an organic group and alkaline metal ions, preferably $Na^+$ ions, more preferably a solution containing sodium acetate, so that a homogeneous film over the first layer is obtained;
d) performing a heating treatment of the sample to remove the organic groups by calcination and allow homogeneous diffusion of the alkaline metal ions within the first layer;
e) immersing the coating obtained in step d) in a solution containing metal ions selected from the group consisting of silver, gold, palladium, platinum, nickel and cobalt ions, for at least one hour, at a temperature comprised between 15°C and 90°C to obtain the complete exchange of the alkaline metal ions by the metal ions;
f) rinsing and drying the coating obtained in step e);
g) irradiating the layer coating obtained in step f) with radiation permitting activation of the photocatalytic material, preferably the energy of the incident radiation being within the band gap of the photocatalytic material for a time sufficient to reach a volume fraction $\phi$ which is the volume fraction of metallic particles to reach $\phi^* + \delta\phi$, with $0<\delta\phi\leq5\%$, the critical volume fraction $\phi^*$ being the volume fraction for which the obtained multilayered composite undergoes insulator to metal transition.

13. Use of a multilayered composite material according to any one of claims 1-6 or obtained by a method according to any one of claims 7-12 as a strain gauge.

**Patentansprüche**

1. Mehrschichtiges Verbundmaterial, umfassend:

- eine untere Schicht (1)
- eine metallische Schicht (2)

bestehend aus einer isolierenden Matrixphase und einer metallischen Partikelphase, wobei die metallischen Partikel in der isolierenden Matrix verteilt sind, **dadurch gekennzeichnet, dass**
eine Volumenfraktion $\phi$, die das Verhältnis zwischen dem Volumen von metallischen Partikeln und dem Volumen der metallischen Schicht ist, einer kritischen Volumenfraktion $\phi^* + \delta\phi$ entspricht, mit $0<\delta\phi\leq5\%$, wobei die kritische Volumenfraktion $\phi^*$ die Volumenfraktion ist, für die eine Erhöhung der Leitfähigkeit der metallischen Schicht als eine Funktion der Volumenfraktion $\phi$ einen maximalen Wert aufweist.

2. Mehrschichtiges Verbundmaterial nach Anspruch 1, wobei metallische Partikel aus der Gruppe ausgewählt sind, bestehend aus Silber-, Gold-, Palladium-, Platin-, Kobalt- und Nickelpartikeln.

3. Mehrschichtiges Verbundmaterial nach Anspruch 1 oder 2, wobei der Durchmesser der metallischen Partikel im Bereich zwischen 1 und 500 nm liegt.

4. Mehrschichtiges Verbundmaterial nach einem der Ansprüche 1 - 3, wobei das Volumen von $\phi^*$ durch ein Verfahren bestimmt wird, das die folgenden Schritte umfasst:

   - Aufzeichnen einer Kalibrationskurve R=f($\phi$); und
   - Bestimmen des Wendepunkts der Kurve, wobei der Wendepunkt $\phi^*$ entspricht.

5. Mehrschichtiges Verbundmaterial nach einem der Ansprüche 1 - 3, wobei das Volumen von $\phi^*$ durch das Verfahren bestimmt wird, das die folgenden Schritte umfasst:

   - Aufzeichnen einer Kalibrationskurve GF=f($\phi$); und
   - Bestimmen des maximalen Punkts der Kurve oder des Punkts, an dem d(GF)/d($\phi$) null ist, wobei der Punkt $\phi^*$ entspricht.

6. Mehrschichtiges Verbundmaterial nach einem der Ansprüche 1 - 5, wobei $0<\delta\phi\leq4\%$.

7. Verfahren zur Herstellung eines mehrschichtigen Verbundmaterials nach einem der Ansprüche 1 - 6, umfassend die Schritte, bestehend aus:

   a) Bereitstellen einer unteren Schicht,
   b) Bereitstellen auf der unteren Schicht einer metallischen Schicht, bestehend aus einer isolierenden Matrixphase und einer metallischen Partikelphase, wobei die metallischen Partikel in der isolierenden Matrix verteilt sind, wobei eine Volumenfraktion ($\phi$) das Verhältnis zwischen dem Volumen von metallischen Partikeln ist und das Volumen der metallischen Schicht einer kritischen Volumenfraktion $\phi^* + \delta\phi$ entspricht, mit $0<\delta\phi\leq5\%$, wobei $\phi^*$ die Volumenfraktion ist, für die eine Erhöhung der Leitfähigkeit der metallischen Schicht als eine Funktion der Volumenfraktion $\phi$ einen maximalen Wert aufweist.

8. Verfahren nach Anspruch 7, wobei Schritt b) den Schritt umfasst, bestehend aus:

   - Bereitstellen auf der unteren Schicht einer Schicht, die ein photokatalytisches Material umfasst,
   - In-Kontakt-Bringen der unteren Schicht, die mit der Schicht bedeckt ist, die ein photokatalytisches Material umfasst, mit einer Lösung, die Metallionen enthält, ausgewählt aus der Gruppe, bestehend aus Silber-, Gold-, Palladium-, Platin-, Kobalt- und Nickelionen, und
   - Bestrahlen der unteren Schicht, die mit der Schicht bedeckt ist, die ein photokatalytisches Material umfasst, mit einer Strahlung, die die Aktivierung des photokatalytischen Materials ermöglicht, während einer Zeit, die ausreichend ist, um eine Volumenfraktion ($\phi$) zu haben, die das Verhältnis zwischen dem Volumen der metallischen Partikel und dem Volumen der metallischen Schicht ist, die einer kritischen Volumenfraktion $\phi^* + \delta\phi$ entspricht, mit $0<\delta\phi\leq5\%$, wobei $\phi^*$ die kritische Volumenfraktion ist, für die eine Erhöhung der Leitfähigkeit der metallischen Schicht als eine Funktion der Volumenfraktion $\phi$ einen maximalen Wert aufweist.

9. Verfahren nach Anspruch 8, umfassend die Schritte, bestehend aus:

   a) Ablegen, durch einen Salz-Gel-Pfad, auf einer unteren Schicht, einer ersten Schicht eines Materials, das durch ein Matrizenmittel mesostrukturiert ist, wobei das Material ein photokatalytisches Material und ein Material, das Siliciumdioxid enthält, umfasst, und;
   b) Ablegen, durch einen Salz-Gel-Pfad, auf der ersten Schicht einer zweiten Schicht eines Materials, das durch ein Matrizenmittel mesostrukturiert ist, wobei das Material ein Material umfasst, das Siliciumdioxid enthält und frei von photokatalytischem Material ist;

c) Durchführen einer Hitzebehandlung auf der ersten und der zweiten Schicht, wodurch eine verfestigte Beschichtung erhalten wird;

d) optional Kalzinieren der ersten und der zweiten Schicht zur Entfernung des Matrizenmittels,

e) In-Kontakt-Bringen der verfestigten Beschichtung, die in Schritt c) erhalten wurde, mit einer Lösung, die Metallionen enthält, ausgewählt aus der Gruppe, bestehend aus Silber-, Gold-, Palladium-, Platin-, Nickel- und Kobaltionen.

f) Bestrahlen der unteren Schicht, die durch die gefestigte Beschichtung bedeckt ist, mit einer Strahlung, die die Aktivierung des photokatalytischen Materials ermöglicht, während einer Zeit, die ausreichend ist, um eine Volumenfraktion ($\phi$) zu haben, die das Verhältnis zwischen dem Volumen von metallischen Partikeln und dem Volumen der metallischen Schicht ist, die einer kritischen Volumenfraktion $\phi^* + \delta\phi$ entspricht, mit $0<\delta\phi,<5\%$, wobei $\phi^*$ die kritische Volumenfraktion ist, für die eine Erhöhung der Leitfähigkeit der metallischen Schicht als eine Funktion der Volumenfraktion $\phi$ einen maximalen Wert aufweist.

**10.** Verfahren nach Anspruch 7, wobei Schritt b) die Schritte umfasst, bestehend aus:

b) Bereitstellen auf der unteren Schicht einer ersten Schicht, umfassend ein photokatalytisches Material,

c) In-Kontakt-Bringen der unteren Schicht, die mit der ersten Schicht bedeckt ist, die ein photokatalytisches Material umfasst, mit einer Lösung, die Metallionen enthält, ausgewählt aus der Gruppe, bestehend aus Silber-, Gold-, Palladium-, Platin-, Kobalt- und Nickelionen, und

d) Bestrahlen der unteren Schicht, die mit der ersten Schicht bedeckt ist, die ein photokatalytisches Material umfasst, mit Strahlung während einer Zeit t

e) Anpassen der Zeit t der Bestrahlung mit einer Volumenfraktion $\phi$ an eine Kalibrationskurve $t=f(\phi)$

f) Messen von GF mit der folgenden Formel

$$GF = \frac{\Delta R}{R0}\frac{1}{\Delta\varepsilon}$$

wobei

$\Delta R$ die Differenz des Widerstands ist, gemessen auf einer Probe, die einer Differenz von angebrachter Spannung auf die Probe entspricht;

$R0$ der Widerstand ist, gemessen auf einer Probe, die keiner Spannung unterliegt; und

$\Delta\varepsilon$ die Spannung ist, induziert durch die angebrachte Spannung

g) Wiederholen der Messung von GF m Male, um den Durchschnitt von GF gemäß der allgemeinen Formel zu berechnen:

$$<GF> = \frac{1}{m}\sum_{j=1}^{m} GFj$$

h) Messen der Standardabweichung von GF-Messungen mit der folgenden Formel:

$$\sigma GF = \sqrt{\frac{[\sum(GFj) - <GF>]2}{m}}$$

i) Messen der Merit-Zahl F mit der folgenden Formel

$$F = \frac{<GF>}{\sigma GF}$$

j) Messen von dF/d($\phi$).

k) wenn dF/d$\phi$=0; wird der maximale Wert von F Fmax erhalten und die Bestrahlung gestoppt.

1) wenn dF/d$\phi$ > 0; Bestrahlen des Verbundmaterials während einer weiteren Zeit und Wiederholen der Schritte b) bis j), bis die Anforderung von k) erfüllt ist.

11. Verfahren nach einem der Ansprüche 8 - 10, wobei das photokatalytische Material ausgewählt ist aus der Gruppe von Metalloxiden, bestehend aus Titandioxid, Zinkoxid, Bismuthoxid und Vanadiumoxid, Wolframoxid, Eisenoxid, $BiFe_2O_3$ oder einer Mischung daraus oder jeder festen Lösung daraus.

12. Verfahren nach Anspruch 7, wobei Schritt b) die Schritte umfasst, bestehend aus:

a) Ablegen, durch einen Salz-Gel-Pfad, auf der unteren Schicht einer ersten Schicht eines Materials, das durch ein Matrizenmittel mesostrukturiert ist, wobei das Material ein photokatalytisches Material und ein Material, das Siliciumdioxid enthält, umfasst, und

b) optional Durchführen einer Hitzebehandlung auf der ersten Schicht;

c) Ablegen über der ersten Schicht einer zweiten Schicht einer Lösung, die eine organische Gruppe und Alkalimetallionen enthält, vorzugsweise $Na^+$-Ionen, insbesondere eine Lösung, die Natriumacetat enthält, so dass ein homogener Film über der ersten Schicht erhalten wird;

d) Durchführen einer Hitzebehandlung der Probe, um die organische Gruppe druch Kalzinieren zu entfernen und eine homogene Diffusion der Alkalimetallionen innerhalb der ersten Schicht zu ermöglichen;

e) Eintauchen der Beschichtung, die in Schritt d) erhalten wurde, in eine Lösung, die Metallionen enthält, ausgewählt aus der Gruppe, bestehend aus Silber-, Gold-, Palladium-, Platin-, Nickel- und Kobaltionen, während mindestens einer Stunde, bei einer Temperatur im Bereich zwischen 15 °C und 90 °C, um den vollständigen Austausch der Alkalimetallionen durch die Metallionen zu erhalten;

f) Spülen und Trocknen der Beschichtung, die in Schritt e) erhalten wurde;

g) Bestrahlen der Schichtbeschichtung, die in Schritt f) erhalten wurde, durch eine Strahlung, die die Aktivierung des photokatalytischen Materials ermöglicht, wobei vorzugsweise die Energie der einfallenden Strahlung innerhalb der Bandlücke des photokatalytischen Materials, liegt, während einer Zeit, die ausreichend ist, um eine Volumenfraktion $\phi$ zu haben, die die Volumenfraktion von metallischen Partikeln ist, um $\phi^* + \delta\phi$ zu erreichen, mit 0<$\delta\phi\leq$5%, wobei die kritische Volumenfraktion $\phi^*$ die Volumenfraktion ist, für die der erhaltene mehrschichtige Verbundstoff einem Isolator-Metall-Übergang unterzogen wird.

13. Verwendung eines mehrschichtigen Verbundmaterials nach einem der Ansprüche 1 - 6 oder erhalten durch ein Verfahren nach einem der Ansprüche 7 - 12 als ein Dehnungsmessstreifen.

**Revendications**

1. Matériau composite multicouche comprenant :

- une couche de base (1)
- une couche métallique (2) consistant en une phase de matrice isolante et de particules métalliques, lesdites particules métalliques étant réparties dans la matrice isolante, **caractérisé en ce que**

une fraction volumique $\phi$ qui est le rapport entre le volume de particules métalliques et le volume de la couche métallique correspond à une fraction volumique critique $\phi^* + \delta\phi$, avec 0 < $\delta\phi \leq$ 5 %, la fraction volumique critique $\phi)^*$ étant la fraction volumique pour laquelle une augmentation de conductivité de la couche métallique en fonction de la fraction volumique $\phi$ a une valeur maximale.

2. Matériau composite multicouche selon la revendication 1, dans lequel les particules métalliques sont choisies dans le groupe consistant en des particules d'argent, d'or, de palladium, de platine, de cobalt et de nickel.

3. Matériau composite multicouche selon la revendication 1 ou 2, dans lequel le diamètre des particules métalliques est compris entre 1 et 500 nm.

**4.** Matériau composite multicouche selon l'une quelconque des revendications 1 à 3, dans lequel la valeur de $\phi^*$ est déterminée par une méthode comprenant les étapes suivantes :

- tracer une courbe d'étalonnage R = f($\phi$) ; et
- déterminer le point d'inflexion de la courbe, ledit point d'inflexion correspondant à $\phi^*$.

**5.** Matériau composite multicouche selon l'une quelconque des revendications 1 à 3, dans lequel la valeur de $\phi^*$ est déterminée par la méthode comprenant les étapes suivantes :

- tracer une courbe d'étalonnage GF = f($\phi$) ; et
- déterminer le point maximal de la courbe ou le point où d(GF)/d($\phi$) est nul, ledit point correspondant à $\phi$)*.

**6.** Matériau composite multicouche selon l'une quelconque des revendications 1 à 5, dans lequel $0 < \delta\phi \leq 4$ %.

**7.** Procédé de fabrication d'un matériau composite multicouche selon l'une quelconque des revendications 1 à 6, comprenant les étapes consistant à :

a) fournir une couche de base,
b) fournir sur la couche de base une couche métallique consistant en une phase de matrice isolante et des particules métalliques, lesdites particules métalliques étant réparties dans la matrice isolante, dans lequel une fraction volumique $\phi$ qui est le rapport entre le volume des particules métalliques et le volume de la couche métallique correspond à une fraction volumique critique $\phi^* + \delta\phi$, avec $0 < \delta\phi \leq 5$ %, $\phi^*$ étant la fraction volumique pour laquelle une augmentation de conductivité de la couche métallique en fonction de la fraction volumique $\phi$ a une valeur maximale.

**8.** Procédé selon la revendication 7, dans lequel l'étape b) comprend les étapes consistant à :

- fournir sur la couche de base une couche comprenant un matériau photocatalytique ;
- mettre en contact la couche de base couverte par la couche comprenant un matériau photocatalytique avec une solution contenant des ions de métal choisis dans le groupe consistant en des ions d'argent, d'or, de palladium, de platine, de cobalt et de nickel, et
- irradier la couche de base couverte par la couche comprenant un matériau photocatalytique avec un rayonnement permettant une activation du matériau photocatalytique, pendant un temps suffisant pour avoir une fraction volumique qui est le rapport entre le volume de particules métalliques et le volume de la couche métallique correspondant à une fraction volumique critique $\phi^* + \delta\phi$, avec $0 < \delta\phi \leq 5$ %, $\phi^*$ étant la fraction volumique pour laquelle une augmentation de conductivité de la couche métallique en fonction de la fraction volumique $\phi$ a une valeur maximale.

**9.** Procédé selon la revendication 8, comprenant les étapes consistant à :

a) déposer par voie sol-gel, sur une couche de base, une première couche d'un matériau, mésostructurée par un agent de matriçage, ledit matériau comprenant un matériau photocatalytique et un matériau contenant de la silice et ;
b) déposer par voie sol-gel, sur la première couche, une seconde couche d'un matériau, mésostructurée par un agent de matriçage, ledit matériau comprenant un matériau contenant de la silice et étant dépourvu de matériau photocatalytique ;
c) réaliser un traitement de chauffage des première et seconde couches ce par quoi un revêtement consolidé est obtenu ;
d) optionnellement, calciner les première et seconde couches pour éliminer l'agent de matriçage,
e) mettre en contact le revêtement consolidé obtenu dans l'étape c) avec une solution contenant des ions de métal choisis dans le groupe consistant en les ions d'argent, d'or, de palladium, de platine, de nickel et de cobalt, et
f) irradier la couche de base couverte par le revêtement consolidé avec un rayonnement permettant une activation du matériau photocatalytique, pendant un temps suffisant pour avoir une fraction volumique $\phi$ qui est le rapport entre le volume des particules métalliques et le volume de la couche métallique correspondant à une fraction volumique critique $\phi^* + \delta\phi$, avec $0 < \delta\phi \leq 5$ %, , $\phi^*$ étant la fraction volumique critique pour laquelle une augmentation de conductivité de la couche métallique en fonction de la fraction volumique $\phi$ a une valeur maximale.

**10.** Procédé selon la revendication 7, dans lequel l'étape b) comprend les étapes consistant à :

b) fournir sur la couche de base une première couche comprenant un matériau photocatalytique ;

c) mettre en contact la couche de base couverte par la première couche comprenant un matériau photocatalytique avec une solution contenant des ions de métal choisis dans le groupe consistant en les ions d'argent, d'or, de palladium, de platine, de cobalt et de nickel, et

d) irradier la couche de base couverte par la première couche comprenant un matériau photocatalytique avec un rayonnement pendant un temps t

e) faire concorder le temps t d'irradiation avec une fraction volumique $\phi$ avec une courbe d'étalonnage t = f($\phi$)

f) mesurer GF avec la formule suivante

$$GF = \frac{\Delta R}{R0}\frac{1}{\Delta \varepsilon}$$

dans laquelle

$\Delta R$ est la différence de la résistance mesurée sur un échantillon correspondant à une différence de contrainte appliquée sur ledit échantillon ;

R0 est la résistance mesurée sur un échantillon sans contrainte ; et

$\Delta \varepsilon$ est l'effort induit par la contrainte appliquée ;

g) répéter m fois la mesure de GF pour calculer la moyenne de GF selon la formule générale

$$< GF > = \frac{1}{m}\sum_{j=1}^{m} GFj$$

h) mesurer l'écart-type de mesures de GF avec la formule suivante :

$$\sigma GF = \sqrt{\frac{[\sum(GFj) - < GF >]2}{m}}$$

i) mesurer le facteur de mérite F avec la formule suivante

$$F = \frac{< GF >}{\sigma GF}$$

j) mesurer dF/d$\phi$

k) si dF / d$\phi$ = 0 ; la valeur maximale de F Fmax est obtenue et l'irradiation est arrêtée

l) si dF/d$\phi$ > 0 ; irradier le matériau composite pendant un temps supplémentaire et répéter les étapes b) à j) jusqu'à ce que l'exigence de l'étape k) soit satisfaite.

**11.** Procédé selon l'une quelconque des revendications 8 à 10, dans lequel le matériau photocatalytique est choisi dans le groupe des oxydes de métal consistant en le dioxyde de titane, l'oxyde de zinc, l'oxyde de bismuth et l'oxyde de vanadium, l'oxyde de tungstène, l'oxyde de fer, le $BiFe_2O_3$ ou l'un de leur mélange ou toutes solutions solides de ceux-ci.

**12.** Procédé selon la revendication 7, dans lequel l'étape b) comprend les étapes consistant à :

a) déposer par une voie sol-gel, sur la couche de base, une première couche d'un matériau, mésostructurée par un agent de matriçage, ledit matériau comprenant un matériau photocatalytique et un matériau contenant de la silice et ;

b) optionnellement réaliser un traitement de chauffage de la première couche ;

c) déposer sur la première couche une seconde couche d'une solution contenant un groupe organique et des ions de métal alcalin, de préférence des ions Na$^+$, plus préférablement une solution contenant de l'acétate de sodium, pour qu'un film homogène soit obtenu sur la première couche ;

d) réaliser un traitement de chauffage de l'échantillon pour éliminer les groupes organiques par calcination et permettre une diffusion homogène des ions de métal alcalin au sein de la première couche ;

e) immerger le revêtement obtenu dans l'étape d) dans une solution contenant des ions de métal choisis dans le groupe consistant en les ions d'argent, d'or, de palladium, de platine, de nickel et de cobalt, pendant au moins une heure, à une température comprise entre 15 °C et 90 °C pour obtenir l'échange complet des ions de métal alcalin par les ions de métal ;

f) rincer et sécher le revêtement obtenu dans l'étape e) ;

g) irradier le revêtement de couche obtenu dans l'étape f) avec un rayonnement permettant une activation du matériau photocatalytique, de préférence l'énergie du rayonnement incident étant dans la bande interdite du matériau photocatalytique pendant un temps suffisant pour atteindre une fraction volumique $\phi$ qui est la fraction volumique de particules métalliques pour atteindre $\phi^* + \delta\phi$, avec $0 < \delta\phi \leq 5$ %, la fraction volumique critique $\phi^*$ étant la fraction volumique pour laquelle le composite multicouche obtenu subit une transition d'isolant à métal.

13. Utilisation d'un matériau composite multicouche selon l'une quelconque des revendications 1 à 6 ou obtenu par un procédé selon l'une quelconque des revendications 7 à 12 en tant que jauge de contrainte.

Figure 1a

Figure 1b

Figure 2

Figure 3

Figure 4

Figure 5

Figure 6

Figure 7

Figure 8

Figure 9

Figure 10

Figure 11

Figure 12

Figure 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6073497 A
- FR 1054532

**Non-patent literature cited in the description**

- **KIRKPATRICK.** *S. Rev. Mod. Phys.,* 1973, vol. 45, 574
- **ZHOU et al.** *Carbon,* 2008, vol. 46, 679
- **STANKOVICH et al.** *Nature,* 2006, vol. 442, 282
- **ROWE, A. C. H. ; DONOSO-BARRERA, A. ; RENNER, CH.** *Arscott, S. Phys. Rev. Lett.,* 2008, vol. 100, 145501
- **HE, R. ; YANG, P.** *Nat. Nanotechnol.,* 2006, vol. 1, 42